# EUROPÄISCHE PATENTSCHRIFT

(11) **EP 0 669 800 B1**
(45) Veröffentlichungstag und Bekanntmachung des Hinweises auf die Patenterteilung: **30.09.1998**
(21) Anmeldenummer: 94900131.7
(22) Anmeldetag: 11.11.1993
(51) Int. Cl.: A01N 25/04

(54) **ÖL-IN-WASSER-EMULSIONEN**
OIL IN WATER EMULSIONS
EMULSIONS HUILE DANS EAU

(30) Priorität: 18.11.1992 DE 4238865
(43) Veröffentlichungstag der Anmeldung: 06.09.1995
(73) Patentinhaber: Clariant GmbH, 65929 Frankfurt am Main (DE)
(72) Erfinder: FRISCH, Gerhard, D-61273 Wehrheim (DE); DAMO, Zoltan, D-65817 Eppstein (DE)
(86) Internationale Anmeldenummer: EP9303165
(87) Internationale Veröffentlichungsnummer: WO9410839

(56) Entgegenhaltungen:
- EP-A- 0 062 181
- EP-A- 0 130 370
- EP-A- 0 190 995
- EP-A- 0 224 846
- EP-A- 0 257 286
- EP-A- 0 432 062
- WO-A-90/09103
- BE-A- 645 136
- DE-A- 3 210 869
- US-A- 4 107 302

## Beschreibung

Es sind bereits Öl-in-Wasser-Emulsionen bekannt, die Wirkstoffe aus der Klasse der Phosphorsäureester und Carbamate enthalten und in der Landwirtschaft, im Gartenbau, im Haushalts- und Hygienebereich und/oder im medizinischen Bereich eingesetzt werden.

US-A-4 107 302 nennt wäßrige Emulsionskonzentrate (EW), die neben dem phosphororganischen Wirkstoff zur lnsektizidbekämpfung und dem Tensid noch zwingend eine wäßrige Pufferlösung zur Einstellung eines bestimmten pH-Wertbereiches enthalten.
EP-B-0 196 463 beschreibt Makroemulsionen, die Phosphorsäureester enthalten, wobei zur Dispergierung des Wirkstoffes nichtionische Nonylphenol-Propylenoxid-Ethylenoxid-Addukte verwendet werden.
Aus EP-B-0 062 181 sind Öl-in-Wasser-Emulsionen bekannt, die neben den Wirkstoffen als Emulgator mindestens einen, im allgemeinen mehrere Alkylarylpolyglykolether im Gemisch mit ionischen Alkylarylsulfonsäuresalzen enthalten.
EP-B-0 289 909 offenbart wäßrige phasenstabile homogene Emulsionszusammensetzungen von Organo-Phosphor-Schädlingsbekämpfungsmitteln, die neben dem Wirkstoff ein nichtionisches Block-, Misch- oder Misch/Blockcopolymeres Tensid sowie Harnstoff als Verdicker und Stabilisator enthalten.
EP-A-0 160 182 betrifft wäßrige Mikroemulsionen, die neben einem synthetischen Pyrethroid als Wirkstoff, ein Emulgatorengemisch aus Calciumdodecylbenzolsulfonat, ethoxyliertem Distyrylphenolammoniumsulfat und ethoxyliertem Tristyrylphenol enthalten.
Bei den in GB-PS-0 717 279 und US-A-2 696 453 beschriebenen Emulsionskonzentraten (EC) werden die Wirkstoffe in einer solchen Menge in organischen Solventien (z.B. Xylol, Toluol, Kerosin) gelöst und mit einem Emulgatorengemisch aus einem nichtionischen und ionischen Tensid (Polyoxyalkylenglykol/Alkylarylsulfonat) versetzt, daß sich bei Verdünnen dieser Konzentrate mit Wasser auf die Anwendungskonzentration eine ausreichend stabile wäßrige Emulsionen bildet. Durch die enthaltenen Lösungsmittel ergeben sich für die Konzentrate jedoch häufig Nachteile in Bezug auf die Brennbarkeit, die toxikologischen Eigenschaften, die Pflanzenverträglichkeit und den Geruch.

Die vorstehend genannten wäßrigen Emulsionskonzentrate (EW) lassen sich nur unter Verwendung von zusätzlichen Hilfsstoffen, wie Verdicker, Stabilisator und Puffer, organischen Lösungsmitteln, sowie den Einsatz von Tensidgemischen, meist auf Basis nichtionischer und ionischer Tenside, herstellen.

Es wurden nun Öl-in-Wasser-Emulsionen in Form von wäßrigen Emulsionskonzentraten (EW) gefunden, die neben Wirkstoffen aus der Klasse der Phosphorsäureester und/oder Carbamate und Wasser mindestens ein Salz eines Arylpolyglykolether-Phosphorsäureesters als ionisches Tensid zwingend enthalten. Der Einsatz von organischen Lösungsmitteln, nichtionischen/ionischen Tensidgemischen und/oder zusätzlichen Hilfsstoffen, wie Verdicker, Stabilisator und Puffer, ist hierbei nicht zwingend erforderlich.

Es ist als äußerst überraschend zu bezeichnen, daß die erfindungsgemäßen wäßrigen Emulsionskonzentrate (EW) stabil sind, denn auf Grund des bekannten Standes der Technik war nicht zu erwarten, daß derartige Emulsionen, die kein Verdickungsmittel, Stabilisator bzw. Puffer, kein oder nur geringe Mengen an organischem Lösungsmittel sowie nur eine Tensidklasse aufweisen, über längere Zeit stabil sind.

Gegenstand der Erfindung sind Öl-in-Wasser-Emulsionen enthaltend 0,001 - 70 Gew.-%, bevorzugt 0,5 bis 45 Gew.-% mindestens eines Wirkstoffes aus der Klasse der flüssigen Phosphorsäureester und/oder Carbamate, 0,001 bis 20 Gew-%, bevorzugt 0,1 bis 10 Gew.-% mindestens eines Salzes eines Arylglykolether-Phosphorsäureesters der Formel I 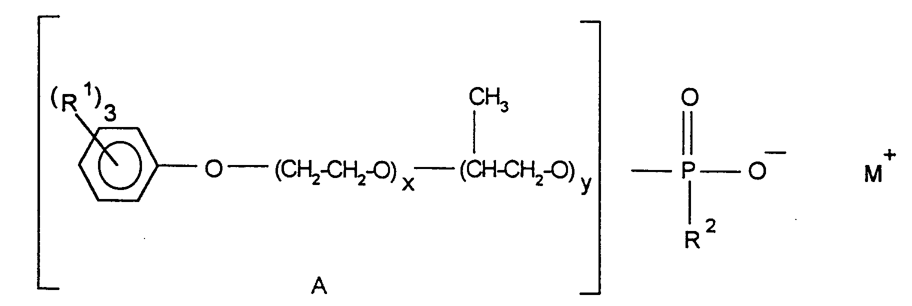 worin
R¹ unabhängig voneinander Wasserstoff, C₁-C₂₄-Alkyl, C₅-C₁₅-Cycloalkyl, C₈-C₂₄-Aryl oder C₅-C₂₄-Alkaryl,
R² Wasserstoff, -O-C₁-C₂₄-Alkyl, -O-C₅-C₁₅-Cycloalkyl oder -O-C₆-C₁₈-Aryl oder A,
M ein Alkalimetall-, Erdalkalimetall- oder Ammoniumion der Formel HN(R³)₃, wobei
R³ unabhängig voneinander Wasserstoff, C₁-C₄-Alkyl, C₅-C₁₅-Cycloalkyl, C₆-C₁₈-Aryl oder eine Gruppe der Formel -(CH₂)_{z}-OH, wobei z eine Zahl von 1 bis 10 und die Reste R¹, R² und R³ gegebenenfalls substituiert sind,
x eine Zahl von 0 bis 80, y eine Zahl von 0 bis 50, wobei die Summe aus x und y ungleich Null und
ad 100 Gew.-% Wasser und gegebenenfalls Lösungsmittel und/oder Zusatzstoffe mit der Maßgabe, daß die Emulsionen neben dem Emulgator der Formel I keinen anderen Emulgator enthalten.

Die erfindungsgemäßen Öl-in-Wasser-Emulsionen enthalten mindestens einen agrochemischen Wirkstoff, einen Wirkstoff zur Bekämpfung von Schädlingen im Haushalt und Hygienebereich und/oder einen pharmakologisch wirksamen Stoff aus der Klasse der Phosphorsäureester und/oder Carbamate. Derartige Wirkstoffe sind bekannt und in "The Pesticide Manual" 9th edition, The British Crop Protection Council, 1991 beschrieben.
Unter den agrochemischen Stoffen sind im vorliegenden Fall alle üblicherweise im Pflanzenschutz verwendbaren Wirkstoffe zu verstehen. Hierzu gehören zum Beispiel Insektizide, Akarizide, Nematizide, Fungizide, Herbizide, Wachstumsregulatoren und Düngemittel.
Als Beispiele für solche Wirkstoffe seien im einzelnen genannt:
O,O-Diethyl-O-[2-isopropyl-4-methylpyrimidinyl-(6)]thiophosphat (Diazinon)
O,O-Diethyl-O-[3,5,6-trichlor-2-pyridyl]thiophosphat (Chlorpyrophos) 2-(1-Methylpropyl)phenylmethylcarbamat (BPMC)
O,O-Dimethyl-S-methylcarbamoylmethyl-thiophosphorsäureester (Dimethoat) Chlor-bicyclo[3.2.0]hepta-2,6-dien-6-yl-phosphorsäureester (Heptenophos)
O,O-Diethyl-O-1-phenyl-1H-1,2,4-triazol-3-yl-thiophosphorsäureester (Triazophos)
   Ethyl-2-diethoxyphosphinthioyloxy-5-methylpyrazolyl[1,5-α]pyrimidin-6-carbonsäureester (Pyrazophos)
O,O-Diethyl-O-(4-nitro-phenyl)-thiono-phosphonsäureester
O,O-Dimethyl-O-(4-nitro-phenyl)-thiono-phosphorsäureester (Fenitrothion)
O-(Ethyl-O-(4-methylthio-phenyl)-S-propyl-dithiophosphat
O,O-Diethyl-O-(3-chlor-4-methyl-7-cumarinyl)-thiophosphat
S-[1,2-Bis-(ethoxycarbonyl)-ethyl]-O,O-dimethyl-dithiophosphorsäureester (Malathion)
O,O-Dimethyl-O-(4-methylmercapto-3-methyl-phenyl)-thionophosphorsäureester (Fenthion, Lebaycid)
O-Ethyl-O-(2-isopropyloxycarbonyl-phenyl)-N-isopropylthionophosphorsäureesteramid

Unter Wirkstoffen zur Bekämpfung von Schädlingen im Haushalts- und Hygiene-Bereich sind im vorliegenden Fall alle üblichen in Wasser wenig löslichen Wirkstoffe zu verstehen. Als Beispiele für derartige Wirkstoffe seien im einzelnen genannt:
2-Isopropoxy-phenyl-N-methylcarbamat
O,O-Diethyl-O-(4-nitro-phenyl)-thionophosphorsäureester (Ethyl-Parathion)
O,O-Dimethyl-O-(4-nitro-phenyl)-thionophosphorsäureester (Methyl-Parathion) S-[1,2 -Bis-(ethoxycarbonyl)-ethyl]-O,O-dimethyl-dithiophosphorsäureester
O,O-Dimethyl-O-(3-methyl-4-nitro-phenyl)-thionophosphorsäureester (Sumithion, Folithion)
O,O-Dimethyl-O-(4-methylmercapto-3-methyl-phenyl)-thionophosphorsäureester (Lebaycid, Fenthion)

Unter pharmakologisch wirksamen Stoffen sind im vorliegenden Fall vorzugsweise in veterinärmedizinischen Bereich einsetzbare, in Wasser wenig lösliche Stoffe zu verstehen. Als Beispiel für derartige Wirkstoffe sei genannt: Chlor-bicyclo[3.2.0]hepta-2,6-dien-6-yl-phosphorsäureester (Heptenophos)

Die erfindungsgemäßen Öl-in-Wasser-Emulsionen enthalten mindestens ein Salz eines Arylpolyglykolethers-Phophorsäureesters der Formel I 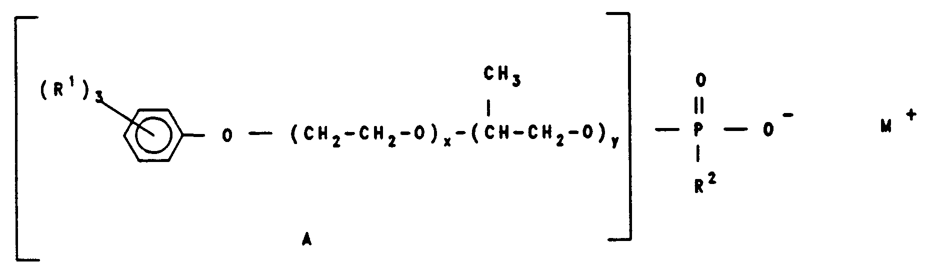 wobei R¹, R², M, x und y die vorstehend genannte Bedeutung besitzen.

Die Reste R¹, R² und R³ sind gegebenenfalls substituiert. Geeignete Substituenten sind Halogene, wie Brom und Chlor, Hydroxygruppe, Nitrogruppe, Aminogruppe, Carboxylgruppe, Sulfonsäuregruppe oder deren Estergruppe.
Es kommen vorzugsweise solche Verbindungen dieses Typs in Betracht, in denen
R¹ C₁-C₆-Alkyl, Phenyl, Naphthyl, Diphenyl, Styryl oder 1-Phenylethyl,
R² C₁-C₆-Alkyl, Phenyl oder A,
M ein Alkalimetallion, Mono-, Di- oder Triethylammoniumion oder Triethanolammoniumion,
x eine Zahl von 10 bis 50 und
y eine Zahl von 10 bis 35 ist.

Besonders bevorzugte Tenside sind Kalium- bzw. Triethylammonium-2,4,6-tris-(1-phenylethyl)-phenol-polyglycolether-monophosphat mit im Mittel 20 EO-Einheiten (EO = Ethylenoxid) sowie Triethanolaminsalze eines Gemisches von Phosphorsäuremono- und diestern eines Tristyrylphenol-Polyglykolethers mit im Mittel 18 bis 20 EO-Einheiten.

Die Tenside der Formel I sind bekannt, wurden aber bisher in Formulierungen in Kombination mit anderen Tensiden eingesetzt. In diesem Zusammenhang wird auf folgende Druckschriften verwiesen:
EP-A-0 163 598, EP-A-0 201 417, EP-A-0 364 328, EP-A-0 432 061,
EP-A-0 432 062, DE-A-3 503 706, DE-A-3 542 440, DE-A-3 614 788 und DE-A-3 624 910.

Die Öl-in-Wasser-Emulsionen enthalten Wasser als kontinuierliche Phase. Handelt es sich um Konzentrate, so ist die Menge an Wasser relativ gering. Im Falle stark verdünnter Emulsionen sind erhebliche Mengen an Wasser enthalten. Die Ölphase (= disperse Phase) ist in Form von Tröpfchen in der wäßrigen Phase verteilt. Die Größe der Oltröpfchen kann dabei innerhalb eines bestimmten Bereiches variiert werden. Im allgemeinen liegt der Teilchendurchmesser zwischen 0,01 und 10 µm, vorzugsweise zwischen 0,2 und 5,0 µm.
In den erfindungsgemäßen Öl-in-Wasser-Emulsionen können die prozentualen Anteile der enthaltenen Komponenten innerhalb größerer Bereiche variiert werden. Der Anteil der Wirkstoffe aus der Klasse der Phosphorsäureester und/oder Carbamate liegt im allgemeinen zwischen 0,001 und 70 Gew.-%, vorzugsweise zwischen 0,5 und 45 Gew.-%. Der Anteil an Tensid der Formel I beträgt im allgemeinen 0,001 bis 20 Gew.-%, bevorzugt 0,1 bis 10 Gew.-%.

Weiterhin enthalten diese Öl-in-Wasser-Emulsionen entweder gar keine, oder aber nur eine geringe Menge an organischen Lösungsmitteln. Sie sind daher nicht brennbar, frei oder zumindest nahezu frei von Geruchsbelästigungen durch organische Lösungsmittel und weisen im allgemeinen eine geringere Toxizität bzw. Phytotoxizität auf als entsprechende Formulierungen, die organische Lösungsmittel in den sonst üblichen Konzentrationen enthalten.
Als organische Lösungsmittel, die gegebenenfalls enthalten sein können , kommen alle üblichen mit Wasser wenig mischbaren organischen Solventien oder Solventien-Gemische, die zwischen 100°C und 290°C sieden, in Betracht. Vorzugsweise genannt seien aromatische Kohlenwasserstoffe, wie Xylol, Toluol, Ethylbenzol, alkylierte Benzole mit durchschnittlich 9 Kohlenstoffatomen, wie die unter der Bezeichnung ®Solvesso (Esso Chemie GmbH) bekannten Lösungsmittel-Typen und Dimethylnaphthalin, ferner halogenierte aromatische Kohlenwasserstoffe, wie Chlorbenzole, außerdem aliphatische Kohlenwasserstoffe, wie Benzin und Petrolether, weiterhin cycloaliphatische Kohlenwasserstoffe, wie Cyclohexan, außerdem Alkohole und Ketone, wie n-Butanol, n-Hexanol, iso-Hexanol, n-Octanol, Cyclohexanol, Benzylalkohol und Di-n-butyl-keton, und ferner Ether und Ester.
Der Gehalt an organischen Lösungsmittel beträgt im allgemeinen 0 - 50 Gew.-%, bevorzugt 0 - 20 Gew.-%, bezogen auf die Emulsion.

Als Zusatzstoffe, die in den erfindungsgemäßen Öl-in-Wasser-Emulsionen enthalten sein können, kommen Konservierungsmittel, Kältestabilisatoren, Farbstoffe und Geruchsverbesserungsmittel in Betracht.
Als Beispiele für Konservierungsmittel seien 2-Hydroxybiphenyl, Sorbinsäure, p-Hydroxybenzaldehyd, p-Hydroxybenzoesäuremethylester, Benzaldehyd, Benzoesäure, p-Hydroxybenzoesäurepropylester und p-Nitrophenol genannt. Der Gehalt an Konservierungsmittel in der Emulsion liegt zwischen 0,01 und 1 Gew.-%.
Als Kältestabilisatoren kommen Glykol, Glycerin, Polyethylenglycol, Zucker und Salze, wie Ammoniumsulfat und Natriumoleat in Betracht, wobei die Emulsionen üblicherweise einen Gehalt von 1 bis 10 Gew.-% aufweisen.
Als Beispiele für Farbstoffe seien Azofarbstoffe und Phthalocyanin-Farbstoffe angeführt. Als Geruchsverbesserungsmittel können Parfümöle eingesetzt werden.

Ein geeignetes Herstellungsverfahren ist in EP-B-0 130 370 beschrieben.

Neben den bereits im Zusammenhang mit dem geringen Gehalt an organischen Lösungsmitteln genannten Vorteilen, zeichnen sich die Öl-in-Wasser-Emulsionen dadurch aus, daß sie unter den in der Praxis herrschenden Bedingungen stabil sind. Bei Langzeit-Lagerungen bleiben diese Emulsionen sowohl bei hohen Temperaturen (50°C) als auch bei tiefen Temperaturen (-5°C, -10°C) hinsichtlich ihrer physikalischen Stabilität und ihres Wirkstoffgehaltes, unverändert.

Die erfindungsgemäßen Öl-in-Wasser-Emulsionen können entweder in der zubereiteten Form oder nach vorheriger Verdünnung appliziert werden. Die Aufwandmenge richtet sich dabei nach der Konzentration der Öl-in-Wasser-Emulsion und nach der jeweiligen Indikation.
Die Anwendung der Emulsionen erfolgt nach den üblichen Methoden, also zum Beispiel durch Spritzen, Sprühen oder Gießen.

Die in den folgenden Tabellen zusammengefaßten Formulierungsbeispiele belegen die breite Anwendbarkeit.
®Solvesso 150 (Esso Chemie GmbH): Siedebereich 186-205°C, Aromatengehalt 99%.
Tensid 1: Triethanolaminsalz eines Gemisches von Phosphorsäuremono- und - diester von 2,4,6-Tris-(1-phenyl-ethyl)-phenol-polyglykolethers mit im Mittel 20 EO-Einheiten.
Tensid 2: Triethanolaminsalz des Phosphorsäuremonoesters von 2,4,6-Tris-(1-phenyl-ethyl)-phenol-polyglykolethers mit im Mittel 20 EO-Einheiten.
Tensid 3: Tristyrylphenol mit im Mittel 20-26 EO-Einheiten.

Tabelle 1 zeigt erfindungsgemäße Öl-in-Wasser-Emulsionen, die über einen Zeitraum von mindestens drei Monaten stabil sind (Lagertemperatur: 25 °C; 50 °C).

Tabelle 2 zeigt als Vergleichsbeispiele Öl-in-Wasser-Emulsionen, die ein nichtionisches Tensid (Tristyrylphenol mit 20 Mol EO) und ein ionisches Tensid (Phenylsulfonat-Calcium) enthalten. Diese Emulsionen weisen schon nach 2 Wochen starken Abbau des Wirkstoffes ( > 10 Gew.-%) auf (Lagertemperatur: 25 °C; 50 °C).

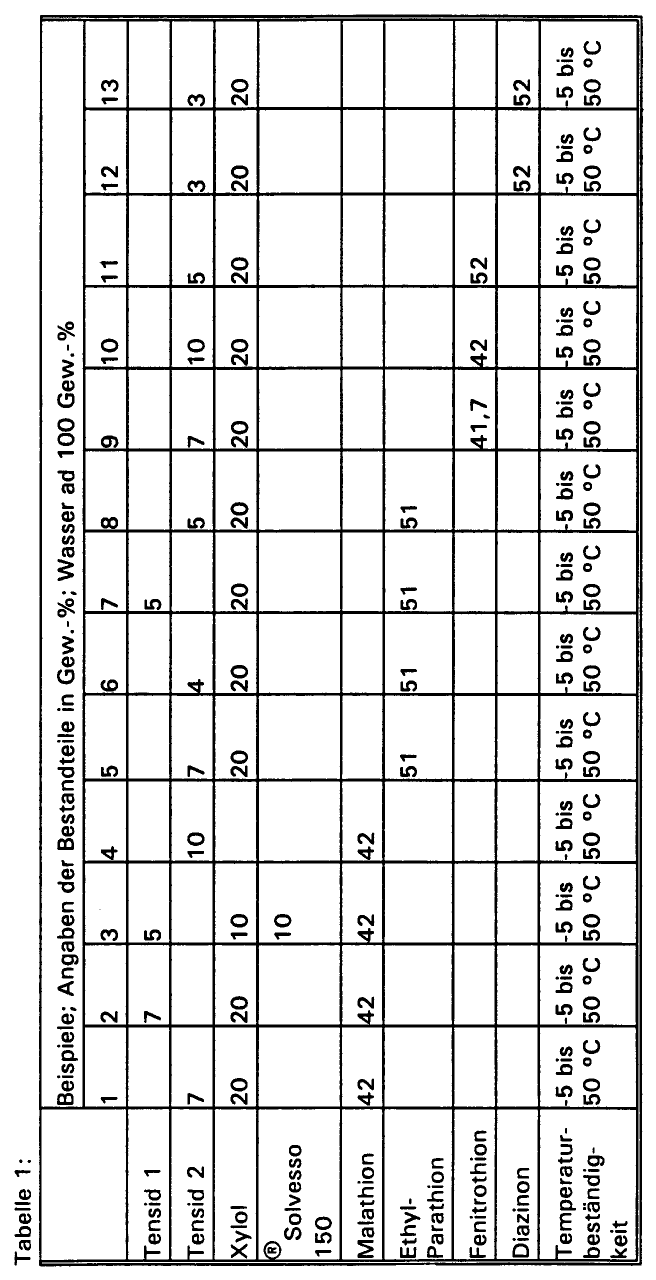

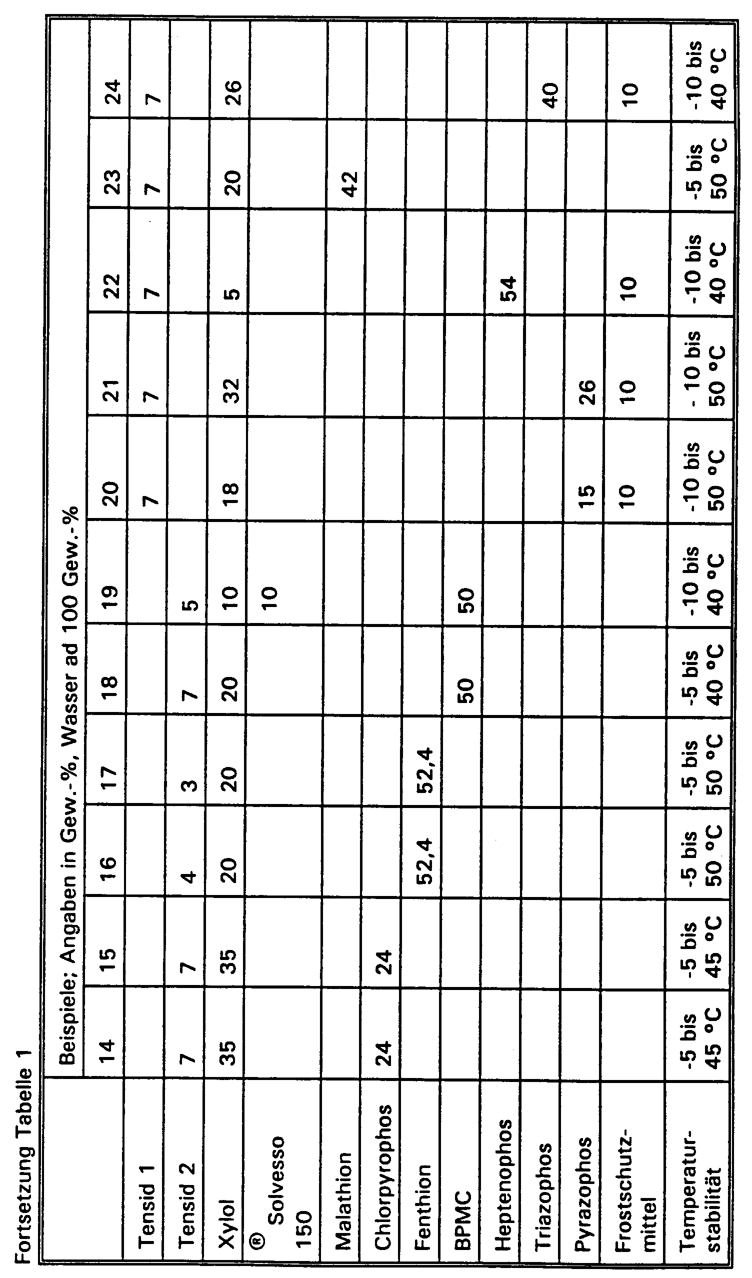

**Tabelle 2**

| Beispiele; Gew.-%; Wasser ad 100 Gew.-% | | | | |
|---|---|---|---|---|
| Zusammensetzung | V1 | V2 | V3 | V4 |
| Tensid 3 | | | 7,5 | |
| ® Emulsogen EL 400 | 8 | 7 | | |
| Phenylsulfonat Ca | 4 | 4 | 7,5 | 11,2 |
| ® Emulsogen 3510 | | | | 13,8 |
| Xylol | 20 | 20 | | |
| Malathion | | | | 52,6 |
| Diazinon | | | 61,7 | |
| Heptenophos | 30 | 25 | | |
| Temperaturstabilität | ./. | ./. | ./. | ,/. |

## Patentansprüche

1. Öl-in-Wasser-Emulsionen enthaltend
0,001 bis 70 Gew.-%, bevorzugt 0,5 bis 45 Gew.-% mindestens eines Wirkstoffes aus der Klasse der flüssigen Phosphorsäureester und/oder Carbamate, 0,001 bis 20 Gew-%, bevorzugt 0,1 bis 10 Gew.-% mindestens eines Salzes eines Arylglykolether-Phosphorsäureesters der Formel I 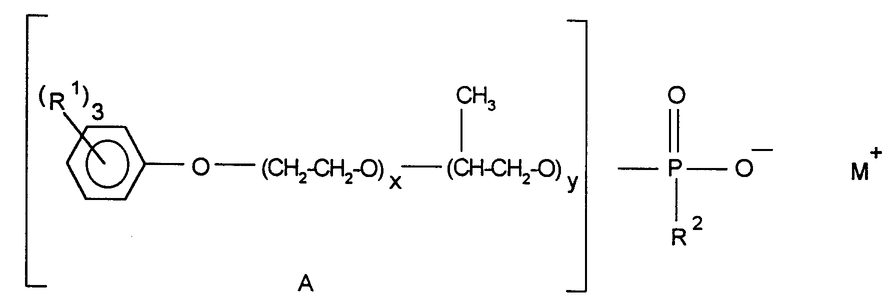 worin
R¹ unabhängig voneinander Wasserstoff, C₁-C₂₄-Alkyl, C₅-C₁₅-Cycloalkyl, C₈-C₂₄-Aryl oder C₅-C₂₄-Alkaryl,
R² Wasserstoff, -O-C₁-C₂₄-Alkyl, -O-C₅-C₁₅-Cycloalkyl oder -O-C₆-C₁₈-Aryl oder A,
M ein Alkalimetall-, Erdalkalimetall- oder Ammoniumion der Formel HN(R³)₃, wobei
R³ unabhängig voneinander Wasserstoff, C₁-C₄-Alkyl, C₅-C₁₅-Cycloalkyl, C₆-C₁₈-Aryl oder eine Gruppe der Formel -(CH₂)_{z}-OH, wobei z eine Zahl von 1 bis 10 und die Reste R¹, R² und R³ gegebenenfalls substituiert sind,
x eine Zahl von 0 bis 80, y eine Zahl von 0 bis 50, wobei die Summe aus x und y ungleich Null und
ad 100 Gew.-% Wasser und gegebenenfalls Lösungsmittel und/oder Zusatzstoffe mit der Maßgabe, daß die Emulsionen neben dem Emulgator der Formel I keinen anderen Emulgator enthalten.

2. Emulsionen nach Anspruch 1 enthaltend mindestens einen agrochemischen Wirkstoff, einen Wirkstoff zur Bekämpfung von Schädlingen in Haushalt und Hygienebereich und/oder einen pharmakologisch wirksamen Stoff aus der Klasse der Phosphorsäureester und/oder Carbamate.

3. Emulsionen nach Anspruch 1, dadurch gekennzeichnet, daß als Tenside Salze von Phosphorsäuremono- und/oder -diester von Phenolpolyglycolether eingesetzt werden.

4. Emulsionen nach Anspruch 1, dadurch gekennzeichnet, daß sie 0 - 50, bevorzugt 0 - 20 Gew.-%, bezogen auf die Emulsion, an Lösungsmittel enthalten.

5. Emulsionen nach Anspruch 4, dadurch gekennzeichnet, daß aromatische, aliphatische oder cycloaliphatische Kohlenwasserstoffe, Alkohole oder Ketone als Lösungsmittel eingesetzt werden.

6. Emulsionen nach Anspruch 1, dadurch gekennzeichnet, daß als Zusatzstoffe Konservierungsmittel, Kältestabilisatoren, Geruchsverbesserungsmittel und/oder Säuren enthalten sind.

7. Emulsion nach Anspruch 1, dadurch gekennzeichnet, daß die Ölphase in Form von Tröpfchen mit einem mittleren Teilchendurchmesser zwischen 0,01 bis 10 µm, bevorzugt 0,2 bis 5,0 µm in der wäßrigen Phase verteilt ist.

8. Verwendung von Öl-in-Wasser-Emulsionen gemäß Anspruch 1 in der Landwirtschaft und im Gartenbau, im Haushalts- und Hygiene-Bereich und/oder im medizinischen Bereich, wobei die Verwendung in Verfahren gemäß Artikel 52(4) EPÜ ausgenommen ist.

## Claims

1. An oil-in-water emulsion comprising
from 0.001 to 70% by weight, preferably from 0.5 to 45% by weight, of at least one active substance from the class of the liquid phosphates and/or carbamates, from 0.001 to 20% by weight, preferably from 0.1 to 10% by weight, of at least one salt of an aryl glycol ether phosphate of the formula I 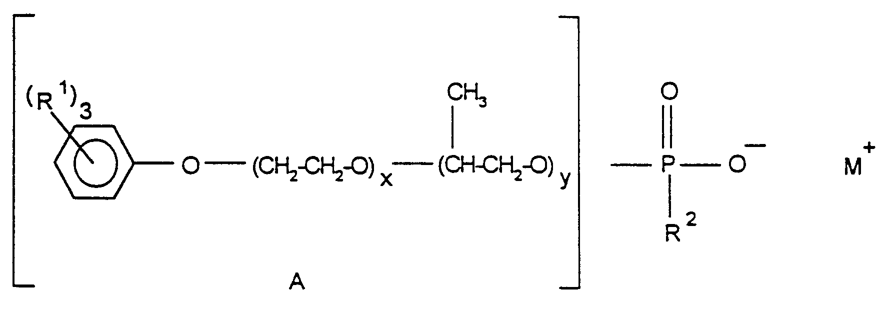 in which
each R¹, independently of the others, is hydrogen, C₁-C₂₄-alkyl, C₅-C₁₅-cycloalkyl, C₈-C₂₄-aryl or C₅-C₂₄-alkaryl,
R² is hydrogen, -O-C₁-C₂₄-alkyl, -O-C₅-C₁₅-cycloalkyl or -O-C₆-C₁₈-aryl or A,
M is an alkali metal ion, alkaline earth metal ion or ammonium ion of the formula HN(R³)₃, where
each R³, independently of the others, is hydrogen, C₁-C₄-alkyl, C₅-C₁₅-cycloalkyl, C₆-C₁₈-aryl or a group of the formula -(CH₂)_{z}-OH in which z is a number from 1 to 10 and the radicals R¹, R² and R³ optionally substituted,
x is a number from 0 to 80 and y is a number from 0 to 50, the sum of x and y not being zero, and,
to make up to 100% by weight, water and, if desired, solvents and/or additives, with the proviso that the emulsion contains, in addition to the emulsifier of the formula I, no other emulsifier.

2. An emulsion as claimed in claim 1, comprising at least one agrochemical active substance, an active substance for controlling pests in the domestic and hygiene sectors and/or a pharmacologically active substance from the class of the phosphates and/or carbamates.

3. An emulsion as claimed in claim 1, wherein the surfactants employed are salts of mono- and/or diphosphates of a phenol polyglycol ether.

4. An emulsion as claimed in claim 1, which contains 0 - 50% by weight, preferably 0 - 20% by weight, based on the emulsion, of solvent.

5. An emulsion as claimed in claim 4, wherein aromatic, aliphatic or cycloaliphatic hydrocarbons, alcohols or ketones are employed as solvent.

6. An emulsion as claimed in claim 1, which contains preservatives, antifreezes, odor-improvers and/or acids as additives.

7. An emulsion as claimed in claim 1, wherein the oil phase is distributed in the form of droplets having an average particle diameter of between 0.01 and 10 µm, preferably from 0.2 to 5.0 µm, in the aqueous phase.

8. The use of an oil-in-water emulsion as claimed in claim 1 in agriculture and in horticulture, in the domestic and hygiene sectors and/or in the medical sector, excluding its use in processes according to Article 52(4) EPC.

## Revendications

1. Emulsions d'huile dans l'eau contenant de 0,001 à 70 % en poids, de préférence de 0,5 à 45 % en poids d'au moins une substance active de la classe des esters d'acide phosphorique et/ou des carbamates liquides, de 0,001 à 20 % en poids, de préférence de 0,1 à 10 % en poids d'au moins un sel d'un arylglycoléther-ester d'acide phosphorique de formule I 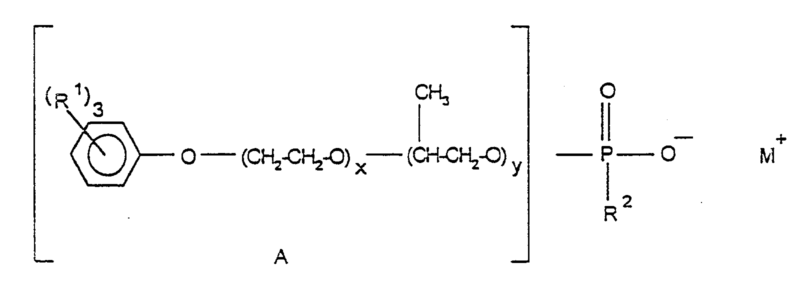 où
R¹ indépendamment les uns des autres, représentent un atome d'hydrogène, des groupes alkyle en C₁-C₂₄, cycloalkyle en C₅-C₁₅, aryle en C₈-C₂₄ ou alcaryle en C₅-C₂₄,
R² représente un atome d'hydrogène, un groupe -O-alkyle en C₁-C₂₄, -O-cycloalkyle en C₅-C₁₅ ou -O-aryle en C₆-C₁₈ ou A,
M représente un ion de métal alcalin, alcalino-terreux ou ammonium de formule HN(R³)₃,
où
R³ indépendamment les uns des autres, représentent un atome d'hydrogène, des groupes alkyle en C₁-C₄, cycloalkyle en C₅-C₁₅, aryle en C₆-C₁₈ ou un groupe de formule -(CH₂)_{z}-OH, z étant un nombre de 1 à 10 et les restes R¹, R² et R³ étant éventuellement substitués,
x est un nombre de 0 à 80, y un nombre de 0 à 50, la somme de x et de y n'étant pas égale à 0 et
q.s.p. 100 % en poids d'eau et éventuellement des solvants et/ou des adjuvants à la condition que les émulsions ne contiennent pas d'autres émulsifiants que l'émulsifiant de formule I.

2. Emulsions selon la revendication 1 contenant au moins une substance active agrochimique, une substance active pour la lutte contre les ravageurs dans le secteur ménager et dans le domaine de l'hygiène et/ou une substance active pharmacologique de la classe des esters d'acide phosphorique et/ou des carbamates.

3. Emulsions selon la revendication 1, caractérisées en ce que l'on utilise en tant qu'agents de surface des sels des mono- et de diesters d'acide phosphorique et de phénolpolyglycoléthers.

4. Emulsions selon la revendication 1, caractérisées en ce qu'elles contiennent de 0 à 50, de préférence de 0 à 20 % en poids par rapport à l'émulsion, de solvant.

5. Emulsions selon la revendication 4, caractérisées en ce que l'on utilise des alcools, des cétones ou des hydrocarbures aromatiques, aliphatiques ou cycloaliphatiques, comme solvants.

6. Emulsions selon la revendication 1, caractérisées en ce qu'elles contiennent des agents de conservation, des stabilisants antigel, des agents parfumants et/ou des acides.

7. Emulsions selon la revendication 1, caractérisées en ce que la phase huileuse est répartie sous forme de gouttelettes avec un diamètre moyen de particules est compris entre 0,01 à 10 µm, de préférence de 0,2 à 5,0 µm dans la phase aqueuse.

8. Utilisation d'émulsions huile dans l'eau selon la revendication 1 en agriculture, horticulture, dans le secteur ménager et dans le domaine de l'hygiène et/ou dans le domaine de la médecine, l'utilisation dans la procédure selon l'article 52(4) de l'OEB étant exclue.
